Europäisches Patentamt

European Patent Office

Office européen des brevets

(11) Publication number: 0 270 038
A2

# EUROPEAN PATENT APPLICATION

(21) Application number: 87117617.8

(22) Date of filing: 27.11.87

(51) Int. Cl.⁴ G03G 15/00

(30) Priority: 29.11.86 JP 285197/86

(43) Date of publication of application:
08.06.88 Bulletin 88/23

(84) Designated Contracting States:
DE FR GB NL

(71) Applicant: MITA INDUSTRIAL CO. LTD.
2-28, 1-chome, Tamatsukuri Higashi-ku
Osaka 540(JP)

(72) Inventor: Yamamoto, Haruo
640-7, Oaza Shichiyama Kumatori-cho
Sennan-gun Osaka, 590-04(JP)
Inventor: Ogawa, Shusaku Shimizuoka
Greencoat manshon 113-go
3-14-17, Shimizugaoka
Sumiyosi-ku Osaka-shi Osaka, 558(JP)

(74) Representative: Schwan, Gerhard, Dipl.-Ing.
Elfenstrasse 32
D-8000 München 83(DE)

(54) A copying machine.

(57) The copying machine comprises a monitoring means which causes operation keys of the copying machine to functions as the memory address input key, I/O address input key, and data input key and also causes the indicators to functions for the address display and data display, and a selection switching means which selectively enables a means to cause the operation keys and indicators to operate in their original functions or said monitoring means during operation of the copying machine.

Fig 1

## A copying machine

### BACKGROUND OF THE INVENTION

#### 1. Field of the Invention

The present invention relates to a copying machine and more specifically to a copying machine equipped with a function capable of inspecting operating conditions.

#### 2. Description of the prior Art

With an object of checking operating conditions of a microcomputer controlled copying machine, a copying machine which is equipped beforehand with a monitor program in addition to the control program essentially provided for a copying machine is disclosed in an invention such for example in Japanese unexamined patent application No. 1985-209805.

When checking operating conditions with the copying machine of this disclosure, a monitor program is caused to be executed instead of the control program to rewrite the control data of a nonvolatile RAM. And then the control program is caused to be executed instead of the monitor program by establishing a status forbidden of rewriting the control data.

Thus, the copying machine operates as originally intended according to the control data rewritten artificially during monitor program execution. Therefore desired operating conditions can be set artificially, the checking can be accomplished easily.

However, in a conventional copying machine of the above, one program of the control program and monitor program is executed entirely separately from another, and it is necessary to start operation by turning on the power when switching from one program to another. There is a problem in which much time and labor are required.

There is a further problem wherein data in a volatile RAM could not be transferred (because the power is turned off once) nor could the data be transferred from the control program to the monitor program (because rewriting is forbidden) while it was only possible to transfer only a limited control data in a nonvolatile RAM from the monitor program to the control program.

### SUMMARY OF THE INVENTION

A primary object of the present invention is to provide a copying machine which is capable of executing the monitor program during operation of the copying machine so as to suitably check the conditions thereof.

The copying machine according to the present invention is controlled by a microcomputer and comprises a monitoring means which causes operation keys of the copying machine to functions as the memory address input key, I/O address input key, and data input key and also causes the indicators to functions for the address display and data display, and a selection switching means which selectively enables a means to cause the operation keys and indicators to operate in their original functions or said monitoring means during operation of the copying machine.

Enabling the monitoring means in place of the means to cause operation keys and indicators to operate in their original functions by the selection switching means, operation keys and indicators can not operate as functions of the copying machine, and thus the copying machine will not operate as a copying machine by appearance. However, because the memory address and I/O address which correspond to operation keys of the copying machine can be made freely accessible, data normally generated when respective operation keys are manipulated can be written artificially in the memory address or I/O address. And as the control program is being executed except for the part which relates to operation keys and indicators, it becomes possible to cause the same operation as that of a normal copying machine provided the data are written artificially as mentioned above. Then, it becomes possible to read on the indicators the data of any memory address and I/O address.

Thus, it is possible to easily check conditions of memory or I/O during operation of the copying machine. It is also possible to cause desired operating conditions artificially. In addition, because there is no need to turn off the power, data communication between the control program and monitor program becomes possible regardless of nonvolatile RAM and volatile RAM.

When the selection switching means enables the means to cause the operation keys and indicators to operate in their original functions, the copying machine operates completely as a normal copying machine.

## BRIEF DESCRIPTION OF THE DRAWINGS

FIG. 1 is a block diagram of an embodiment of the copying machine according to the present invention.

FIG. 2 shows a general flowchart of the copying machine as shown in FIG. 1.

FIG. 3 is a plan view of the operating unit of the copying machine as shown in FIG 1.

FIG. 4 (a)(b)(c) shows a flowchart of the monitor program of the copying machine as shown in FIG. 1.

## DETAILED DESCRIPTION OF THE PREFERRED EMBODIMENTS

The present invention will be more specifically described with reference to the embodiments shown in the drawings. It is to be noted that any of the embodiments shown in the drawings shall not limit the present invention.

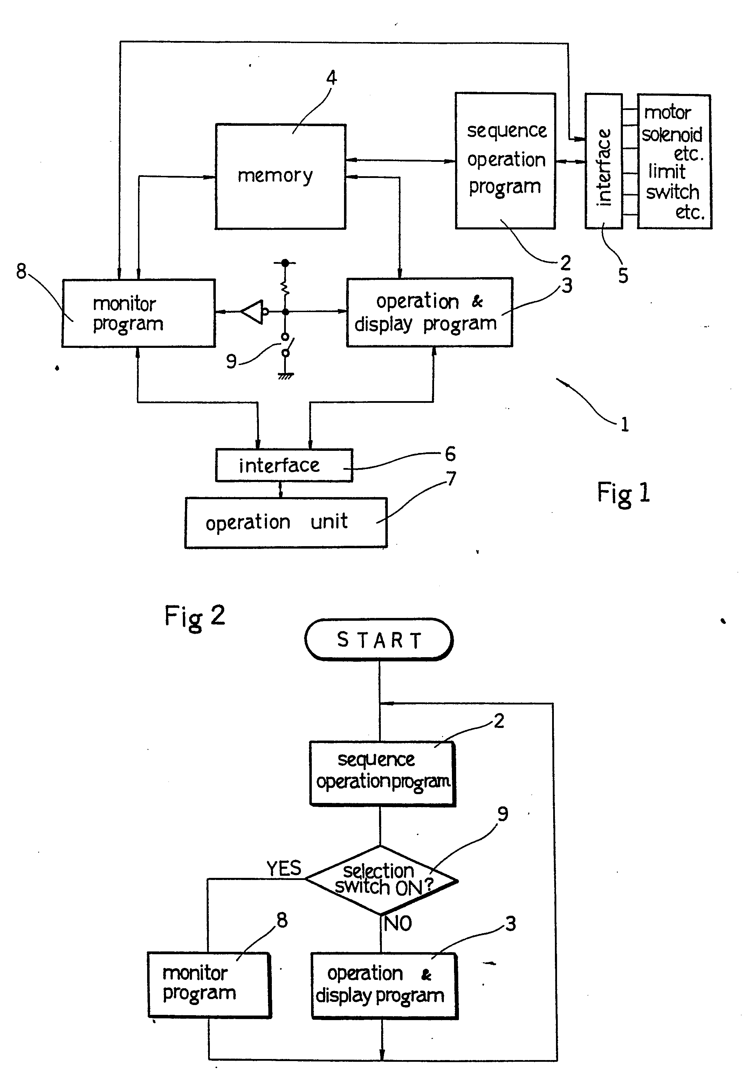

FIG. 1 shows a copying machine of an embodiment of the present invention, in which the program to be executed by the microcomputer is shown in the block diagram and is regarded the same as a hardware.

The copying machine 1 comprises a sequence operation program 2 and a operation and display program 3 as the control program normally provided with the copying machine.

The sequence operation program 2 drives the motor, solenoid and so forth by means of the interface 5 according to the contents of the memory 4. The sequence operation program 2 also reads out conditions of limit switch and so forth and writes them into the memory 4.

The operation and display program 3 reads out conditions of operation keys of the operation unit 7 by means of interface 6 and write them into the memory 4, and causes the contents of certain area of the memory 4 to be displayed in the indicators of the operation unit 7.

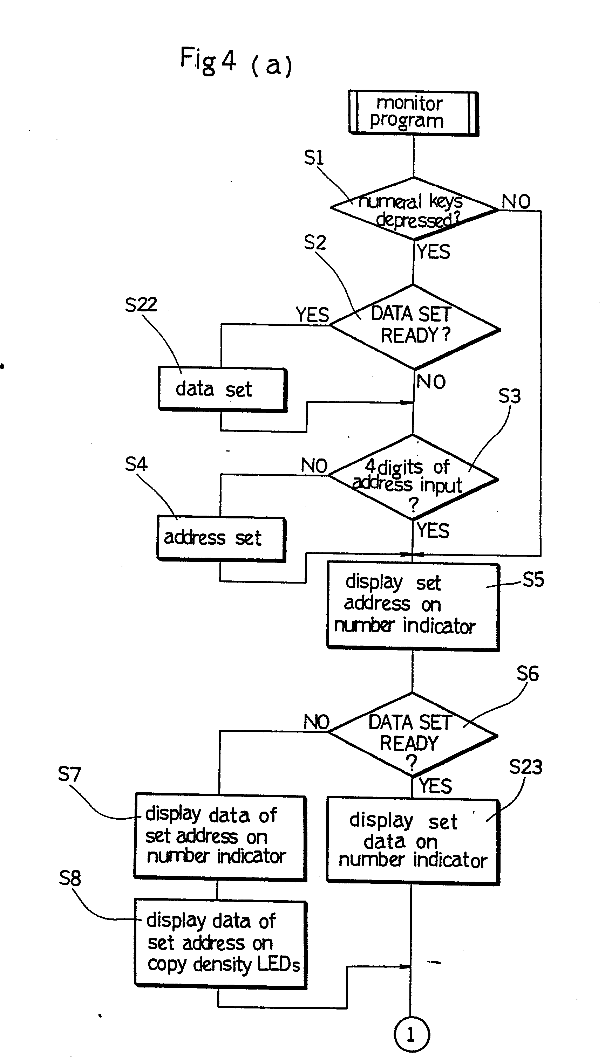

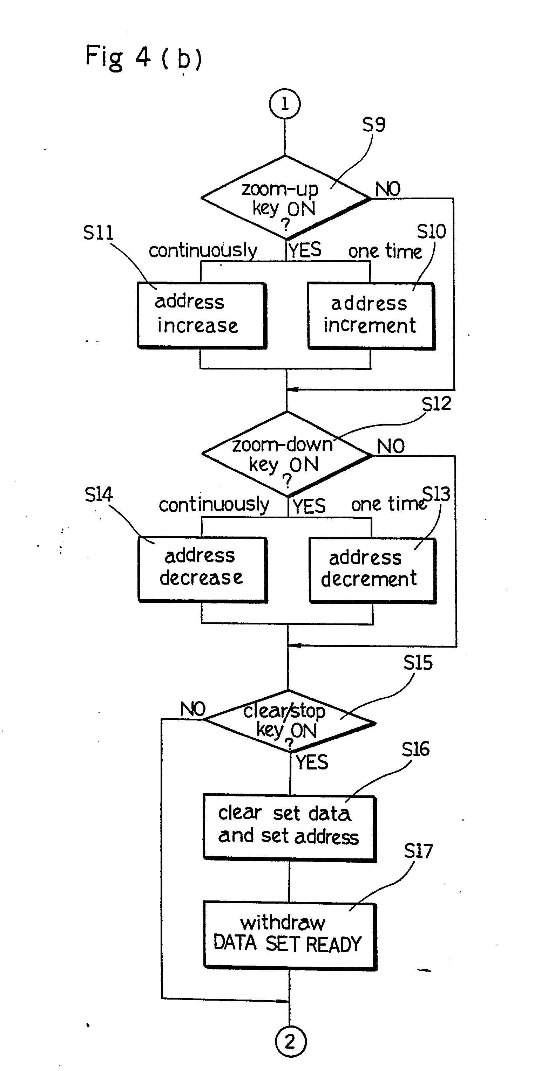

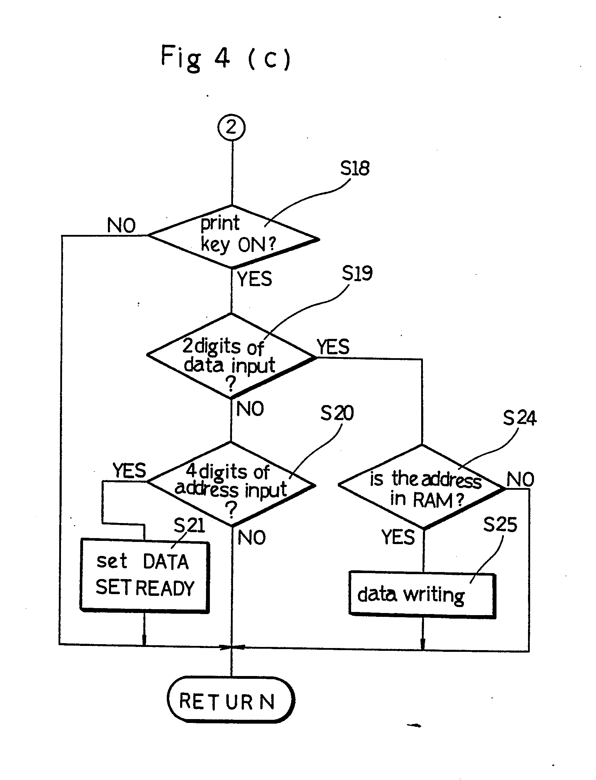

The copying machine 1 comprises a monitor program 8 which is directly accessible to the memory 4 and interface 5. The monitor program 8 is also accessible to the operation unit 7 by means of interface 6. The operation of the monitor program 8 will be described later in detail with referring to FIG. 4.

Furthermore, the copying machine 1 has the selection switch 9 and as shown in FIG. 2, when this selection switch 9 is turned off, the operation and display program 3 is executed while the monitor program 8 is not executed. Conversely, when the selection switch 9 is turned on, the monitor program 8 is executed while the operation and display program 3 is not executed.

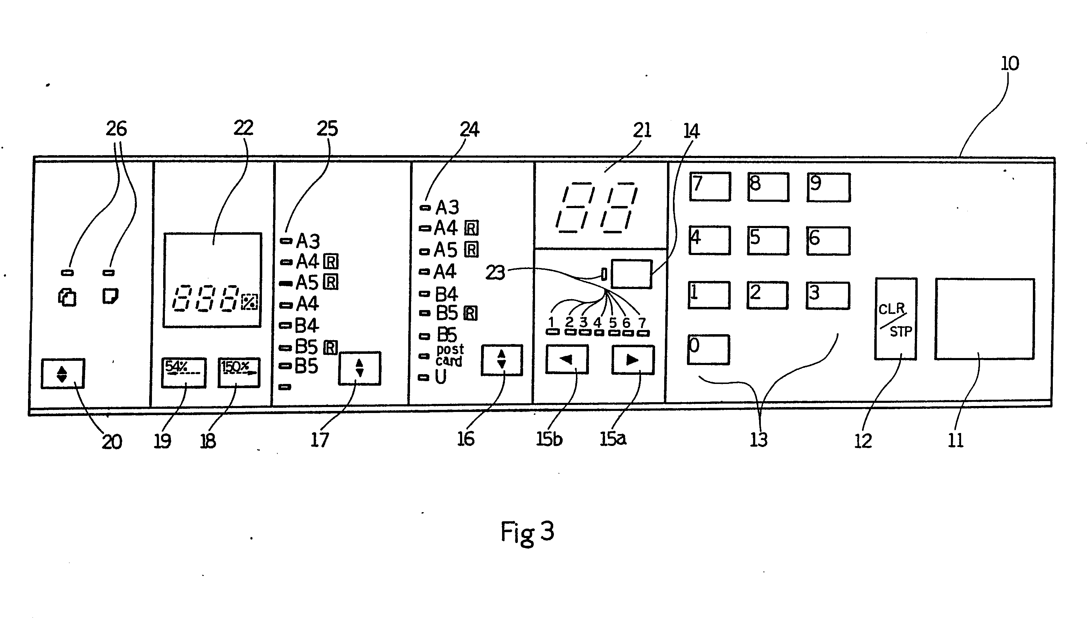

FIG. 3 shows the operation panel 10 disposed on the operation unit 7 of the copying machine 1, and this operation panel 10 has in order from right the print key 11, clear/stop key 12, numeral key 13, auto exposure key 14, density decreasing key 15a, density increasing key 15b, paper size key 16, document size key 17, zoom-up key 18, zoom-down key 19, and double sides copy key 20. Also provided are the number indicator 21 to display the number of copied paper and the number indicator 22 to display the copying magnification. Further provided are LED group 23 to indicate steps of copying density, LED group 24 to indicate steps of paper size, LED group 25 to indicate steps of document size and LED group 26 to indicate choice of double sides copy.

When the selection switch 9 is turned off, operation and display program 3 is executed and operation keys of the operation panel 10 actuate with its original functions and indicators also display what is originally designed to. Since the sequence operation program 2 is executed, the operation of the copying machine 1 is not any different from that of normal copying machine.

However, when the selection switch 9 is turned on, operation and display program 3 is not executed but the monitor program 8 is executed.

When the monitor program is executed, the print key 11 is provided with a function to indicate the break point of data, and the clear/stop key 12 accomplishes the function to cancel the input. Numeral key 13, automatic exposure key 14, density decreasing key 15a, density increasing key 15b, paper size key 16, document size key 17 and double sides copy key 20 respectively correspond to 0 - 9, A, B, C, D, E, and F thereby to fulfill the function as an input key of hexadecimal number. Further, the zoom-up key 18 becomes the up key of the address and the zoom-down key 19 functions as the down key of the address.

Furthermore, the number indicator 21 to display the number of copied paper fulfills the function to display data in 2 digits of hexadecimal number (for example, it displays a number such as [A1]) and the number indicator 22 to display the copying magnification fulfills the function to display address in 3 digits of hexadecimal number (for example, it indicates an address such as [2FF]).

Furthermore, the LED group 23 to indicate steps of copying density fulfills the function to display the contents of the address displayed on the number indicator 22 in 8 bit of [LIGHT ON = 1] and [LIGHT OFF = 0] (for example, it displays such as [10100001]).

As shown in FIG. 4 (a), the CPU enters the monitor program 8 when [DATA SET READY] is not set.

When numeral keys 13 and so forth are depressed, hexadecimal numbers are input and set sequentially as address until 4 digits are input (S1 - S4).

The set address is displayed on the number indicator 22 and the data of the set address are read out and displayed on the number indicator 21 and the copying density LED group 23 (S5 - S8).

Since the address is given in 4 digits, the most significant digit is not displayed. It is not practically necessary to display the most significant digit and there will be no inconvenience even if it is omitted.

As shown in FIG. 4(b), when the zoom-up key 18 is depressed for one time, the address is incremented and the address is kept increasing by depressing the zoom-up key 18 continuously (S9 - S11). Likewise, when the zoom-down key 19 is depressed for one time, the address is decremented and the address is kept decreasing by depressing the zoom-down key 19 continuously (S12 - S14).

For retring the address setting from the start, simply depress the clear/stop key 12 (S15 - S17).

As shown in FIG. 4(c), [DATA SET READY] is set by depressing the print key 11 with 4 digits of address being input (S18 - S21).

In [DATA SET READY] mode, data are input (S1, S2, S22) by depressing the numeral keys 13 and so forth and the set data are displayed in the number indicator 21 (S23).

When 2 digits of data are set and print key 11 depressed, data are written in if the address is in the RAM area (S18, S19, S24, S25). If the address is not in the RAM area, data writing is not executed.

In this manner, arbitrary address (memory address and I/O address) can be specified and the contents thereof can be read out. It is also possible to write arbitrary data into such address, and the control program of the copying machine is being executed simultaneously. Therefore, it becomes possible to check operating condition of components while keeping the copying machine operating.

While only certain embodiments of the present invention have been described, it will be apparent to those skilled in the art that various changes and modifications may be made therein without departing from the spirit and scope the present invention as claimed.

## Claims

1. A copying machine controlled by a microcomputer comprising a monitoring means which causes operation keys of the copying machine to functions as the memory address input key, I/O address input key, and data input key and also causes the indicators to functions for the address display and data display, and a selection switching means which selectively enables a means to cause the operation keys and indicators to operate in their original functions or said monitoring means during operation of the copying machine.

2. The copying machine as claimed in claim 1, wherein the monitoring means causes the numeral key, automatic exposure key, density decreasing key, density increasing key, paper size key, document size key, and double sides copy key of the coping machine to function as the input key of hexadecimal number and causes also the clear/stop key to function as the input cancel key, thereby causing the print key to function as the break point key of input.

3. The copying machine as claimed in claim 1 or claim 2, wherein the monitoring means causes the copying magnification indicator to function for the address display and causes the copied number indicator to function for the data display.

0 270 038

Fig 1

Fig 2

START

sequence operation program 2

selection switch ON? 9

YES

NO

monitor program 8

operation & display program 3

Fig 3

0 270 038

# Fig 4 (a)

```
            ┌──────────────┐
            │   monitor    │
            │   program    │
            └──────┬───────┘
                   │
      S1           │
         ◇─────────┴──────────◇  NO
        ⟨  numeral keys        ⟩──────┐
        ⟨  depressed?          ⟩      │
         ◇────────────────────◇       │
                   │ YES              │
      S2           │                  │
         ◇─────────┴──────────◇       │
   YES  ⟨     DATA SET          ⟩     │
  ┌─────⟨     READY ?           ⟩     │
  │      ◇────────────────────◇       │
  │                │ NO               │
 S22               │                  │
  │   ┌──────────┐ │       S3         │
  │   │          │ │   ◇──────────◇   │
  └──▶│ data set │ │   ⟨ 4 digits  ⟩  │
      │          │ │NO⟨ of address ⟩  │
      └────┬─────┘ ┌──⟨ input ?    ⟩  │
           │       │  ◇──────────◇   │
 S4        │       │       │ YES      │
  │  ┌──────────┐  │       │          │
  │  │          │  │       │          │
  └─▶│ address  │  │       │          │
     │   set    │  │       │          │
     └────┬─────┘  │       │          │
          │        │   ┌───┴──────┐   │
          └────────┘   │ display  │   │
                       │ set      │◀──S5
                       │ address  │
                       │ on number│
                       │ indicator│
                       └────┬─────┘
                            │
          S6                │
             ◇──────────────┴─◇
        NO  ⟨   DATA SET        ⟩
     ┌──────⟨   READY ?         ⟩
     │       ◇────────────────◇
     │              │ YES    S23
 S7  │              │
  │ ┌──────────┐   ┌┴─────────┐
  │ │ display  │   │ display  │
  └▶│ data of  │   │ set data │
    │ set      │   │ on number│
    │ address  │   │ indicator│
    │ on number│   └────┬─────┘
    │ indicator│        │
    └────┬─────┘        │
 S8      │              │
  │ ┌──────────┐        │
  │ │ display  │        │
  └▶│ data of  │        │
    │ set      │        │
    │ address  │        │
    │ on copy  │        │
    │ density  │        │
    │ LEDs     │        │
    └────┬─────┘        │
         └──────────────┤
                        │
                      ( 1 )
```

Fig 4 ( b )

①

S9
zoom-up key ON ? — NO

S11 continuously — YES — one time — S10

address increase

address increment

S12
zoom-down key ON ? — NO

S14 continuously — YES — one time — S13

address decrease

address decrement

S15
NO — clear/stop key ON ?

YES

S16
clear set data and set address

S17
withdraw DATA SET READY

②

Fig 4 ( c )